(19) Europäisches Patentamt / European Patent Office / Office européen des brevets

(11) **EP 3 454 034 B1**

(12) **FASCICULE DE BREVET EUROPEEN**

(45) Date de publication et mention
de la délivrance du brevet:
**16.03.2022 Bulletin 2022/11**

(21) Numéro de dépôt: **18193048.8**

(22) Date de dépôt: **06.09.2018**

(51) Classification Internationale des Brevets (IPC):
***G01M 15/14*** *(2006.01)*

(52) Classification Coopérative des Brevets (CPC):
**G01M 15/14**

(54) **PROCÉDÉ ET DISPOSITIF DE MESURE D'UNE MARGE DE POUSSÉE D'UNE TURBOMACHINE**

VERFAHREN UND VORRICHTUNG ZUR MESSUNG EINES SCHUBKRAFTSPIELRAUMS EINER TURBOMASCHINE

METHOD AND DEVICE FOR MEASURING A THRUST MARGIN OF A TURBOMACHINE

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: **07.09.2017 FR 1758238**

(43) Date de publication de la demande:
**13.03.2019 Bulletin 2019/11**

(73) Titulaire: **SAFRAN AIRCRAFT ENGINES**
**75015 Paris (FR)**

(72) Inventeurs:
• **MEQQADMI, Mohammed**
**77550 Moissy-Cramayel (FR)**
• **LACAILLE, Jérôme Henri Noël**
**77550 Moissy-Cramayel (FR)**
• **MOSSER, Pierre Etienne**
**77550 Moissy-Cramayel (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**EP-A2- 1 327 750     FR-A1- 3 012 930**

**Description**

L'invention concerne un procédé et un dispositif de mesure d'une marge de poussée d'une turbomachine.

Un domaine d'application de l'invention est les turbomachines d'aéronefs, comme par exemple turboréacteurs d'avion ou turbopropulseurs d'avion.

La principale caractéristique d'une turbomachine est sa poussée.

Ainsi, il est fondamental de mesurer sa poussée avec précision.

Dans l'état de la technique, la calibration des accessoires bancs est réalisée sur des périodes très éloignées. Elle est habituellement déclarée faite avec une précision de +/-0,25% en termes de marge de poussée.

Le document FR-A-1 416 112 décrit un dispositif d'étalonnage d'un banc de mesure de poussée d'un moteur de fusée.

Le document FR-A-2 535 847 décrit une cellule d'essais de moteurs d'avion, prévoyant une correction aérodynamique de la poussée mesurée.

Le document US-A-2016/0 202 131 décrit la structure mécanique d'un capteur de mesure de poussée.

Le document EP-A-1 327 750 concerne un procédé de détermination d'une poussée en champ libre d'un moteur à turbine à gaz, dans lequel on mesure une poussée appliquée par le moteur sur un châssis et on ajoute des traînées calculées pour déterminer la poussée en champ libre.

Le document FR-A-3 012 930 concerne un procédé d'essai technique pour évaluer un paramètre de fonctionnement d'un moteur-fusée.

Les inventeurs se sont aperçus de ce que les tests de réception pour la vérification des fonctions de la turbomachine sont effectués sur des bancs de test différents, ce qui impacte les mesures de poussée. Un processus de certification impose le calcul d'une marge de poussée à partir de la poussée mesurée.

On a ainsi constaté qu'il y avait une dispersion de la marge de poussée en raison des conditions de test. La dispersion de la marge de poussée résulte de la complexité des conditions de l'essai tels que : les ATC (Adaptations techniques complémentaires), les bancs et les sites. Ainsi, il a été constaté que la mesure de la marge de poussée y est particulièrement influencée par certains composants importants tels que la nacelle secondaire et le banc. En outre, la mesure de la marge de poussée peut être influencée par le fait que les différentes parties de la turbomachine viennent de fournisseurs différents.

L'invention vise à obtenir un procédé et un dispositif de mesure, permettant d'effectuer des mesures de poussée depuis différents bancs d'essai avec différents équipements et de faire en sorte que ces mesures soient comparables.

A cet effet, un premier objet de l'invention est un procédé de mesure d'une marge de poussée d'une turbomachine suivant la revendication 1.

Grâce à l'invention, la marge de poussée est rendue indépendante des conditions d'essai et sa dispersion est réduite. L'invention permet un meilleur contrôle de la production en réduisant l'incertitude sur la mesure de la poussée. En outre, l'invention permet de repérer les tendances d'efficacité de production de chaque fournisseur, ce qui permet d'alerter le fournisseur quand la poussée de la turbomachine produite diminue et se rapproche de la marge limite.

Suivant un mode de réalisation de l'invention, la fonction linéaire ou affine est calculée comme approchant un point prescrit ou passant par un point prescrit, le point prescrit ayant été calculé en fonction de la marge de poussée sur l'intervalle de temps déterminé.

Suivant un mode de réalisation de l'invention, le point prescrit est calculé comme étant un point moyen de la marge de poussée et au milieu de l'intervalle de temps déterminé.

Suivant un mode de réalisation de l'invention, le point moyen de la marge de poussée est calculé comme étant au milieu de la marge de poussée et au milieu de l'intervalle de temps déterminé.

Suivant un mode de réalisation de l'invention, le point prescrit a une valeur temporelle déterminée dans le au moins un intervalle de temps et une valeur de marge de poussée,
la fonction linéaire ou affine est calculée comme minimisant, sur le au moins un intervalle de temps, l'écart entre la marge de poussée et la fonction linéaire ou affine, rapporté à l'écart entre la valeur de marge de poussée du point prescrit et la valeur de la fonction linéaire ou affine à la valeur temporelle déterminée du point prescrit.

Suivant un mode de réalisation de l'invention, la fonction linéaire ou affine $\varphi_j(t_i)$ est calculée comme minimisant, sur le au moins un intervalle de temps, l'expression suivante :

$$E = \sum_{l,i} \left[ (y_i - pt_{Moy}) - (\varphi_j(t_i) - \varphi_j(t_{ptMoy})) \right]^2 \cdot \tau_l(i)$$

où $y_i$ est la marge de poussée,
$\tau_l(i)$ est une fonction binaire indicatrice de chaque intervalle de temps (INTi),

$t_{ptMoy}$ est la valeur temporelle déterminée du point prescrit dans le au moins un intervalle de temps,
$pt_{Moy}$ est la valeur de marge de poussée du point prescrit dans le au moins un intervalle de temps.

Suivant un mode de réalisation de l'invention, le au moins un biais est calculé comme minimisant, sur le au moins un intervalle de temps, la marge de poussée à laquelle sont soustraits le biais et la fonction linéaire ou affine qui est calculée au jour de mesure correspondant à la marge de poussée.

Suivant un mode de réalisation de l'invention, le au moins un biais $b_k$ est calculé comme minimisant, sur le au moins un intervalle de temps, l'expression suivante :

$$\sum_i \left[ y_i - \varphi_j(t_i) - \sum_k b_k . \delta_k(i) \right]^2$$

où $y_i$ est la marge de poussée,
$\delta_k(i)$ est une fonction binaire indicatrice du au moins un équipement k du banc de mesure,
$\varphi_j(t_i)$ est la fonction linéaire ou affine.

Suivant un mode de réalisation de l'invention, on tient compte de la fonction $\gamma_j(t_i)$ indicatrice de l'origine des données depuis la source j de données ou du fournisseur j du au moins un équipement k de banc, et le ou les biais $b_k$ est calculé comme minimisant, sur le au moins un intervalle de temps, l'expression suivante :

$$\sum_{i,j} \gamma_j(i) \cdot \left[ y_i - \varphi_j(t_i) - \sum_k b_k . \delta_k(i) \right]^2$$

où $y_i$ est la marge de poussée,
$\delta_k(i)$ est une fonction binaire indicatrice du au moins un équipement k de banc,
$\varphi_j(t_i)$ est la fonction linéaire ou affine,
$\gamma_j(t_i)$ est la fonction indicatrice de l'origine des données depuis la source j de données ou du fournisseur j du au moins un équipement k de banc.

Un deuxième objet de l'invention est un dispositif de mesure d'une marge de poussée d'une turbomachine suivant la revendication 10.

L'invention sera mieux comprise à la lecture de la description qui va suivre, donnée uniquement à titre d'exemple non limitatif en référence aux dessins annexés, sur lesquels :

- les figures 1, 8 et 11 représentent des mesures de marges de poussée en fonction du temps,
- la figure 2 représente un changement de pente d'une fonction linéaire modélisant la marge de poussée en fonction du temps, suivant un mode de réalisation du procédé et du dispositif de mesure suivant l'invention,
- la figure 3 représente des intervalles de temps pouvant être utilisés pour définir la fonction linéaire de modélisation de la marge de poussée en fonction du temps suivant un mode de réalisation du procédé et du dispositif de mesure suivant l'invention,
- la figure 4 représente des points moyens pouvant être utilisés pour définir la fonction linéaire de modélisation de la marge de poussée en fonction du temps suivant un mode de réalisation du procédé et du dispositif de mesure suivant l'invention,
- la figure 5 est un synoptique modulaire d'un mode de réalisation du procédé et du dispositif de mesure suivant l'invention,
- les figures 6, 9 et 12 représentent la marge de poussée débiaisées en fonction de l'instant de mesure dans le cas respectivement des mesures des figures 1, 8 et 11,
- les figures 7, 10 et 13 représentent un résidu de la marge de poussée débiaisée par rapport à son modèle de fonction linéaire en fonction de l'instant de mesure dans le cas respectivement des mesures des figures 1, 8 et 11.

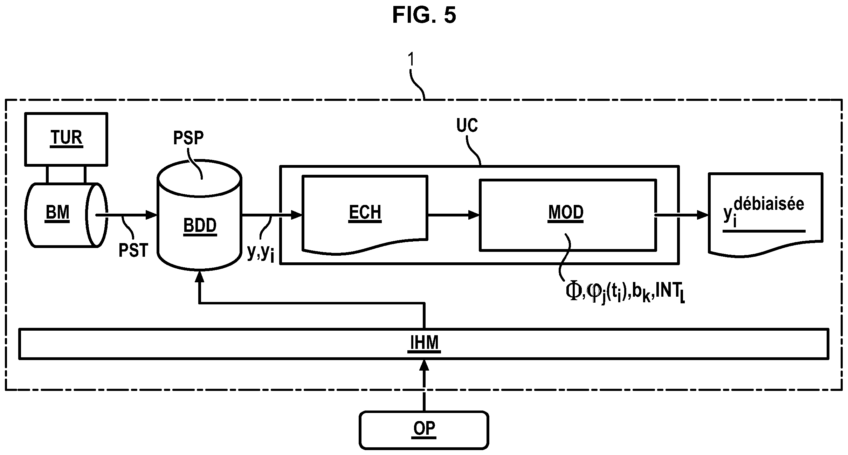

A la figure 5, la turbomachine TUR est montée sur le banc de mesure BM pour mesurer la poussée exercée par la turbomachine TUR (pouvant être un turboréacteur d'avion ou un turbopropulseur d'avion ou autre) dans les conditions d'essai. Le banc BM de mesure comporte un ou plusieurs équipements k de banc et des moyens d'acquisition de données de mesure (pouvant comprendre un ou plusieurs instruments de mesure, un ou plusieurs capteurs de mesure ou autres), permettant de mesurer un ou plusieurs paramètres de la turbomachine TUR, dont la poussée PST procurée par la turbomachine TUR lors de son fonctionnement sur le banc BM de mesure (par exemple par un ou plusieurs capteurs de poussée exercée par la turbomachine TUR lors de son fonctionnement). Ci-dessous, les composants et équipements du banc BM de mesure sont désignés par la lettre k. Le banc BM de mesure peut comporter par exemple comme équipement k une nacelle secondaire et/ou autres. La turbomachine TUR comporte des aubes rotatives montées sur un rotor de celle-ci. Ces aubes rotatives peuvent provenir de différents fournisseurs.

Le dispositif de mesure met en oeuvre les étapes décrites ci-dessous du procédé de mesure suivant l'invention.

Au cours d'une étape de mesure, on acquiert la marge de poussée de la turbomachine TUR sur le banc BM de mesure. Le banc BM de mesure comporte des moyens d'acquisition de données comportant la marge de poussée $y$, $y_i$ de la turbomachine TUR. Par exemple, pour ce faire, on acquiert des données de mesure, comportant une poussée mesurée PST de la turbomachine TUR, par les moyens d'acquisition du banc BM de mesure. Pour chaque essai, la poussée PST est mesurée dans les conditions du jour ti de l'essai. Suivant un mode de réalisation, la poussée PST de la turbomachine TUR, mesurée par le banc BM de mesure, peut avoir été en plus corrigée pour être ramenée dans des conditions standard, par exemple selon une procédure CFM, et étant alors appelée poussée standard PST.

Puis, on calcule la marge de poussée $y$ en fonction d'une poussée spécifiée PSP et de la poussée mesurée ou standard PST. Ce calcul est effectué par des moyens de calcul, comme par exemple l'unité de calcul automatique UC décrite ci-dessous. La poussée spécifiée PSP est par exemple imposée selon un cahier des charges.

La marge de poussée $y$ (ou marge de poussée $y$ en réception) est formulée pour mesurer l'écart de la poussée mesurée ou standard PST rapporté à la poussée spécifiée PSP.

La marge de poussée $y$ (ou $y_i$ dans ce qui suit) peut être par exemple calculée de la manière suivante

$$y = \frac{PST - PSP}{PSP}$$

L'invention utilise un modèle MOD moyen d'évolution temporelle de la marge de poussée $y_i$, ce modèle MOD étant linéaire ou affine par intervalles $INT_l$ de temps. Chaque intervalle de temps $INT_l$ couvre une durée de plusieurs jours. La marge de poussée $y_i$ est donnée en plusieurs jours de mesure, désignés par $t_i$.

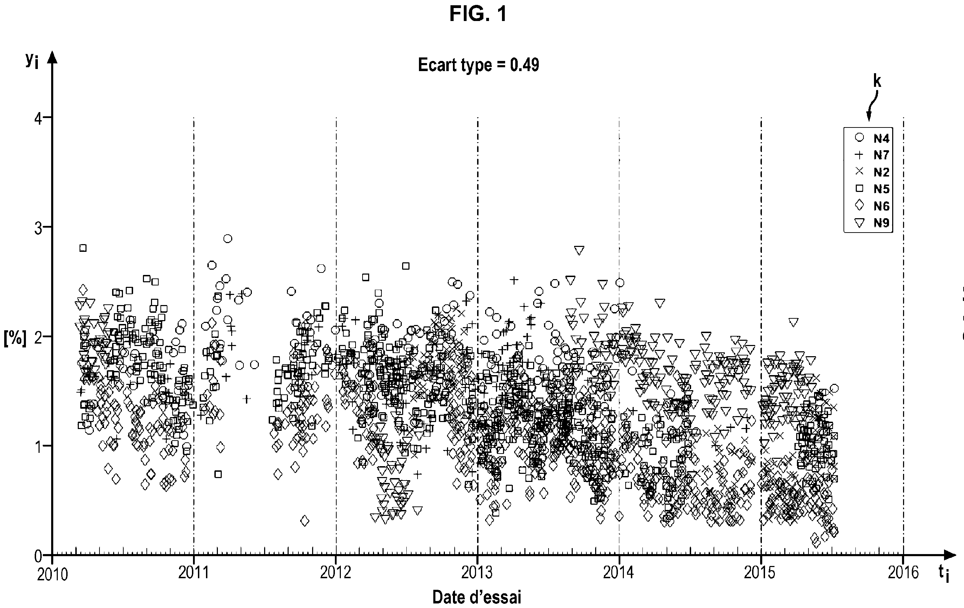

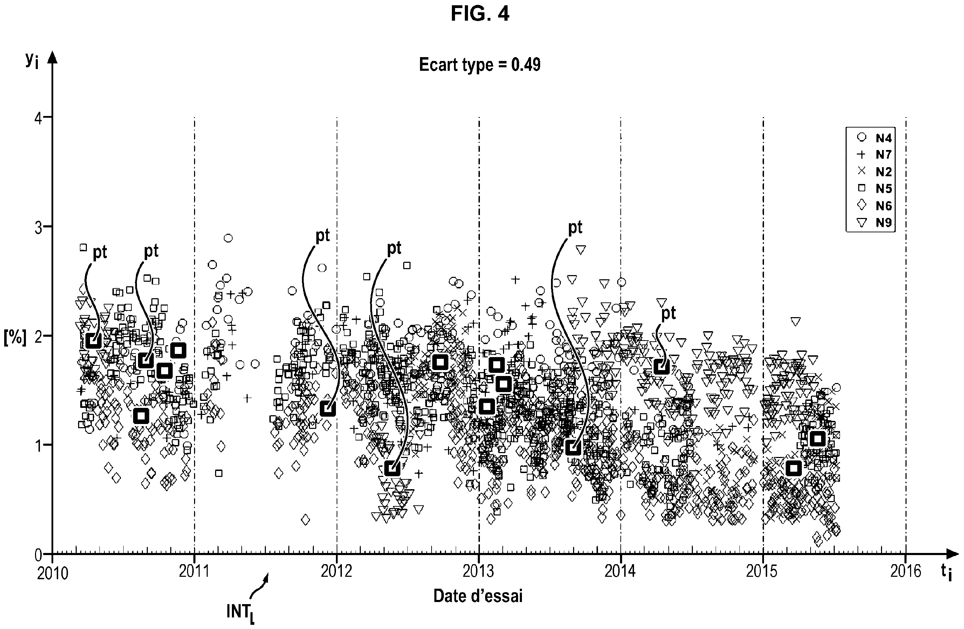

A titre d'exemple, les figures 1 et 4 représentent la marge de poussée $y_i$ en ordonnées en fonction du jour $t_i$ de mesure, pour plusieurs équipements k du banc BM de mesure, comme par exemple la nacelle secondaire (en anglais : cowl) N4, N7, N2, N5, N6, N9 du banc BM pour un premier fournisseur d'aubes rotatives de la turbomachine TUR

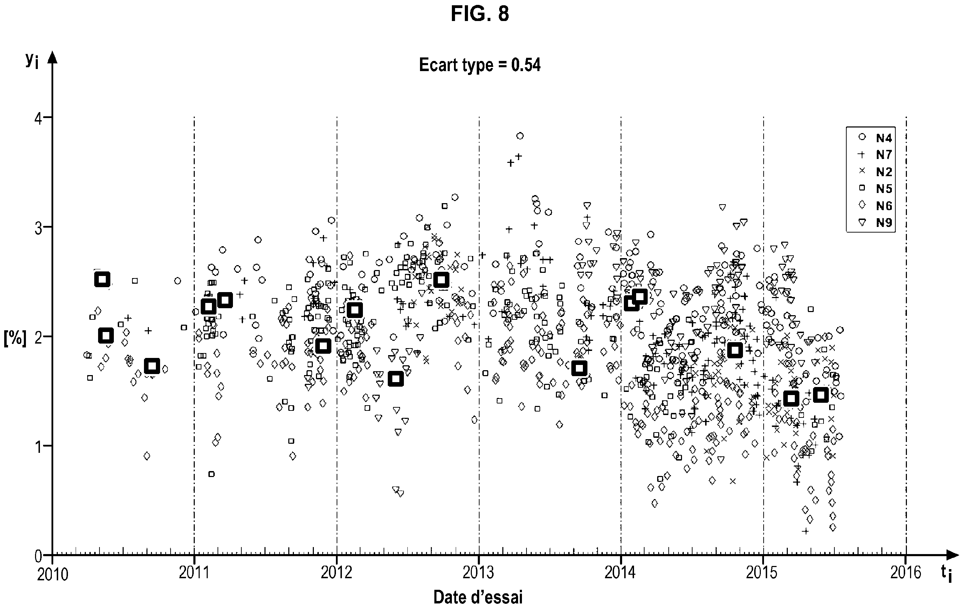

A titre d'exemple, la figure 8 représente la marge de poussée $y_i$ en ordonnées en fonction du jour $t_i$ de mesure, pour plusieurs équipements k de banc, comme par exemple la nacelle secondaire (en anglais : cowl) N4, N7, N2, N5, N6, N9 du banc BM pour un deuxième fournisseur d'aubes rotatives de la turbomachine TUR

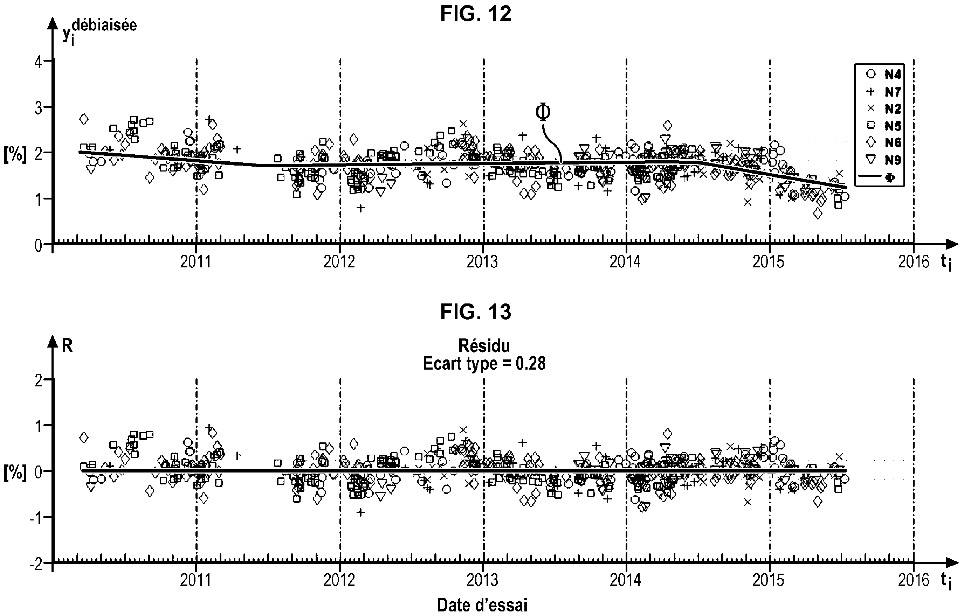

A titre d'exemple, la figure 12 représente la marge de poussée yi en ordonnées en fonction du jour ti de mesure, pour plusieurs équipements k de banc, comme par exemple la nacelle secondaire (en anglais : cowl) N4, N7, N2, N5, N6, N9 du banc BM pour un troisième fournisseur d'aubes rotatives de la turbomachine TUR

On modélise une évolution temporelle de la marge de poussée $y$ ou $y_i$ par au moins une fonction linéaire ou affine $\Phi$ ou $\varphi_j(t_i)$, qui est calculée pour au moins un intervalle $INT_l$ de temps déterminé de la marge de poussée $y$ ou $y_i$.

On calcule au moins un biais $b_k$ de l'équipement k de banc par rapport à la au moins une fonction linéaire ou affine $\Phi$ ou $\varphi_j(t_i)$ ayant été calculée.

On corrige la marge de poussée $y$ ou $y_i$ en soustrayant à cette marge de poussée $y$ ou $y_i$ le au moins un biais $b_k$ de l'équipement k de banc dans le au moins un intervalle $INT_l$ de temps déterminé.

Pour une production donnée, on applique un modèle MOD selon lequel entre les instants correspondant à un intervalle de temps $INT_l$ identifié d'un composant k du banc BM on a une fonction linéaire ou affine $\Phi$, $\varphi_j(t_i)$ de la marge de poussée $y_i$ dépendant du temps $t_i$. Il peut y avoir plusieurs composants k du banc BM, qui peuvent être ou comprendre par exemple le banc BM et la nacelle.

Chaque entrée ou mesure est définie par un triplet $(y, t, k)$, où $y$ est la marge de poussée, ayant été mesurée de la manière décrite ci-dessus, $t$ est la date d'essai, et k le composant du banc BM utilisé entre deux maintenances.

Suivant un mode de réalisation de l'invention, on construit une fonction $\delta_k(i)$ binaire pour chaque composant k du banc BM, cette fonction $\delta_k(i)$ étant égale à 1 si l'observation est faite sur le composant k du banc BM et étant égale à 0 sinon. Cette fonction $\delta_k(i)$ binaire est donc une fonction binaire indicatrice du composant k du banc BM.

Suivant un mode de réalisation de l'invention, on résout le modèle MOD suivant

$$y_i = \sum_k b_k . \delta_k(i) + \Phi(t_i) + \varepsilon$$

où $y_i$ est la marge de poussée, ayant été calculée à partir du banc BM de mesure,

l'indice i est l'indice de chaque donnée observée de cette marge de poussée yi à un jour $t_i$, le nombre de i étant fini et désigne chaque banc BM de mesure,

$\Phi$, $\varphi_j(t_i)$ est une fonction linéaire (ou affine) par intervalles $INT_l$ de temps sur le temps $t_i$, qui représente l'évolution temporelle de la marge de poussée $y_i$,

$b_k$ est le biais introduit par le composant k du banc BM,

$\varepsilon$ est l'erreur de la mesure.

La fonction $\Phi$, $\varphi_j(t_i)$ est donc constituée de segments de droite en fonction du temps $t_i$.

Suivant un mode de réalisation, la fonction $\Phi$, $\varphi_j(t_i)$ linéaire ou affine par intervalles $INT_l$ de temps sur $t_i$ est continue, en pouvant changer de pente, au passage d'un intervalle $INT_l$ de temps à l'intervalle $INT_l$ de temps suivant.

Il peut y avoir une indétermination initiale des seuils de la marge de poussée, qui fait que le modèle MOD est positionné à une constante additive près. Suivant, un mode de réalisation, on prend une condition initiale sur le biais moyen $\overline{b_k}$, pouvant être par exemple :

$$\overline{b_k} = \frac{1}{N} \sum_k N_k \cdot b_k$$

où $N_k$ est le nombre de mesures faites avec le composant k du banc BM.

$$N_k = \sum_i \delta_k(i)$$

Par exemple,

Cela permet de résoudre cette indétermination initiale des seuils de la marge de poussée.

Suivant un mode de réalisation, on peut avoir des jeux différents de fonctions linéaires ou affines $\Phi$, $\varphi_j(t_i)$ par intervalles $INT_l$ de temps sur $t_i$, appelés ci-dessous $\Phi_j$, pour lesquels les tendances sont spécifiques mais pour lesquels les biais $b_k$ doivent rester identiques, comme par exemple dans le cas de fournisseurs différents des composant k pour des tests similaires. On peut définir les fonctions $\Phi_j$ pour chaque tendance en gardant les biais $b_k$ et en tenant compte des fonctions indicatrices $\gamma_j(t_i)$ de sources j de données, par exemple indiquant le fournisseur j des composants k. La fonction $\gamma_j(t_i)$ indicatrice est égale à un pour la source j de données ou le fournisseur j du composant k et est égale à zéro pour les autres sources j de données ou autres fournisseurs j du composant k. La fonction $\Phi$ linéaire ou affine par intervalles $INT_l$ de temps sur ti peut être spécifique à une source de données j ou fournisseur j et tenir compte de la fonction $\gamma_j(t_i)$ indicatrice de l'origine des données depuis la source j de données ou du fournisseur j du composant k, par exemple selon l'équation suivante :

$$\Phi(t_i) = \sum_j \Phi_j(t_i) \gamma_j(t_i)$$

La marge de poussée yi est alors égale à :

$$y_i = \sum_k b_k . \delta_k(i) + \sum_j \Phi_j(t_i) \gamma_j(t_i) + \varepsilon$$

Cela rajoute une nouvelle indétermination par les valeurs initiales des fonctions $\Phi_j$.

Suivant un mode de réalisation, on calcule la ou les fonction $\Phi$, $\varphi_j(t_i)$ linéaire ou affine par intervalles $INT_l$ de temps sur $t_i$.

Suivant un mode de réalisation, une technique de résolution comprend une première étape de résolution, au cours de laquelle on décrit l'évolution (fonction $\Phi$, $\varphi_j(t_i)$ linéaire ou affine par intervalles $INT_l$ de temps sur $t_i$) de la marge de poussée $y_i$ indépendamment du niveau absolu résultant d'un ou plusieurs composants k du banc BM.

Suivant un mode de réalisation, par exemple au cours de cette première étape de résolution, on associe chaque

mesure $y_i$ de la marge de poussée à un ou plusieurs premiers intervalles de temps $INT_l$ où les conditions d'essai sont constantes, appelé intervalles de temps $INT_l$ constant. On a par exemple L premiers intervalles de temps $INT_l$ ou L intervalles de temps $INT_l$ constant, pour 1 étant un entier variant de 1 à L, où L est un entier naturel non nul.

Suivant un mode de réalisation de l'invention, le au moins un premier intervalle de temps $INT_l$ correspond à au moins un deuxième intervalle de temps IPR ou à au moins un intervalle de temps ITC d'utilisation du composant k sur le banc BM de mesure.

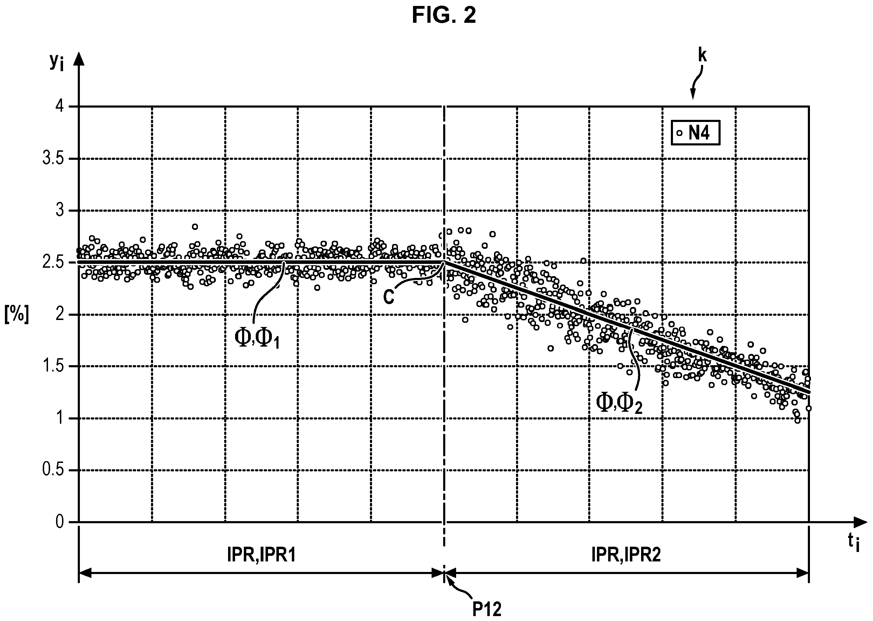

Suivant un mode de réalisation, on définit un ou des deuxièmes intervalles IPR de temps. Sur chacun de ces deuxièmes intervalles IPR de temps, l'évolution (fonction $\Phi$, $\varphi_j(t_i)$ linéaire ou affine par intervalle de temps sur $t_i$) de la marge de poussée est considérée différente. Cela est illustré à titre d'exemple à la figure 2, montrant en abscisse un intervalle de temps IPR1, où la fonction $\Phi$ est égale à une première fonction linéaire ou affine $\Phi_1$, suivi d'un intervalle de temps IPR2, où la fonction $\Phi$ est égale à une deuxième fonction linéaire ou affine $\Phi_2$ et un changement C de pente de la fonction $\Phi$ linéaire ou affine entre la première fonction linéaire ou affine $\Phi_2$ et la deuxième fonction linéaire ou affine $\Phi_2$ au passage P12 entre l'intervalle IPR1 et l'intervalle IPR2 (par exemple pour N4 précité).

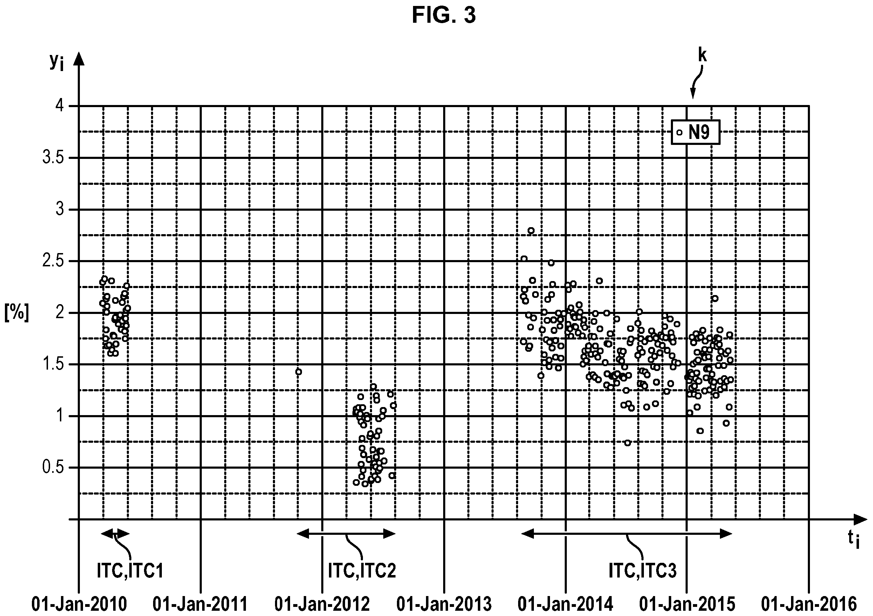

Suivant un mode de réalisation, on définit un ou des troisièmes intervalles ITC de temps du composant k du banc BM, définis comme le ou les intervalles de temps où le composant k est présent sur le banc BM et a été utilisé pour effectuer des mesures $y_i$. L'exemple de la figure 3 illustre l'exemple de définition de troisièmes intervalles de temps ITC1, ITC2, ITC3 d'un composant k étant l'une des nacelles, à savoir la nacelle N9 précitée.

Suivant un mode de réalisation, la fonction linéaire ou affine $\Phi$, $\varphi_j(t_i)$ est calculée comme approchant un point prescrit pt ou passant par un point prescrit pt. On calcule le point prescrit pt sur le premier intervalle de temps $INT_l$ ou intervalle de temps $INT_l$ constant déterminé, et ce en fonction de la marge de poussée y ou $y_i$ présente sur celui-ci. Le point prescrit pt a une valeur temporelle déterminée $t_{ptMoy}$ (selon l'axe des temps $t_i$ en abscisses aux figures 1 à 4) dans le premier intervalle de temps $INT_l$ ou intervalle de temps $INT_l$ constant et une valeur de marge de poussée $pt_{Moy}$ (selon l'axe des ordonnées $y_i$ aux figures 1 à 4).

Un exemple de plusieurs points moyens pt est illustré à la figure 4 dans le cas des différentes nacelles N4, N7, N2, N5, N6 et N9 de la figure 1.

Suivant un mode de réalisation, on calcule le point prescrit pt comme étant un point moyen de la marge de poussée y ou $y_i$, dont la valeur temporelle déterminée $t_{ptMoy}$ est située sensiblement au milieu du premier intervalle de temps $INT_l$ ou intervalle de temps $INT_l$ constant déterminé.

Suivant un mode de réalisation, on calcule le point moyen de la marge de poussée y ou $y_i$ comme étant au milieu de la marge de poussée y ou $y_i$ et au milieu du premier intervalle de temps $INT_l$ ou intervalle de temps $INT_l$ constant déterminé.

On décrit ci-dessous une première étape de calcul de la fonction linéaire ou affine $\Phi$, $\varphi_j(t_i)$.

Suivant un mode de réalisation, on calcule la valeur $\varphi_j(t_{ptMoy})$ de la fonction linéaire ou affine $\Phi$, $\varphi_j(t_i)$ à la valeur temporelle déterminée $t_{ptMoy}$ du point prescrit pt.

Suivant un mode de réalisation, la fonction linéaire ou affine $\Phi$, $\varphi_j(t_i)$ est calculée comme minimisant, sur le premier intervalle de temps $INT_l$ ou intervalle de temps $INT_l$ constant déterminé, l'écart entre la marge de poussée y ou $y_i$ et cette fonction linéaire ou affine $\Phi$, $\varphi_j(t_i)$, rapporté à l'écart entre la valeur de marge de poussée $pt_{Moy}$ du point prescrit pt et la valeur $\varphi_j(t_{ptMoy})$ de la fonction linéaire ou affine $\Phi$, $\varphi_j(t_i)$ à la valeur temporelle déterminée $t_{ptMoy}$ du point prescrit pt, c'est-à-dire minimisant l'écart $(y_i - pt_{Moy}) - (\varphi_j(t_i) - \varphi_j(t_{ptMoy}))$ sur le premier intervalle de temps $INT_l$ ou intervalle de temps $INT_l$ constant déterminé.

Pour ce faire, suivant un mode de réalisation, la fonction linéaire ou affine $\Phi$, $\varphi_j(t_i)$ est calculée comme minimisant, sur le premier intervalle de temps $INT_l$ ou intervalle de temps $INT_l$ constant déterminé, l'expression suivante :

$$ E = \sum_{l,i} \left[ (y_i - pt_{Moy}) - (\varphi_j(t_i) - \varphi_j(t_{ptMoy})) \right]^2 \cdot \tau_l(i) $$

où $\tau_l(i)$ est une fonction binaire pour chaque premier intervalle de temps $INT_l$ ou intervalle de temps $INT_l$ constant déterminé, qui est égale à un pour les mesures de marges de poussée $y_i$ faites pendant cet intervalle $INT_l$ et 0 pour les mesures de marges de poussée $y_i$ faites en dehors de cet intervalle $INT_l$. La fonction binaire $\tau_l(i)$ est donc une fonction binaire indicatrice du premier intervalle de temps $INT_l$ ou intervalle de temps $INT_l$ constant déterminé. On caractérise ainsi l'évolution temporelle (marge de poussée mesurée $y_i$ - point moyen pt) qui est indépendante des conditions de mesure.

Suivant un mode de réalisation, la fonction linéaire $\Phi$, $\varphi_j(t_i)$ est calculée comme minimisant, sur le premier intervalle de temps $INT_l$ ou intervalle de temps $INT_l$ constant déterminé, l'expression suivante :

$$E = \sum_{l,i} \gamma_j(i) \cdot \tau_l(i) \cdot \left[ (y_i - pt_{Moy}) - (\varphi_j(t_i) - \varphi_j(t_{ptMoy})) \right]^2$$

Suivant un mode de réalisation, la fonction linéaire ou affine $\Phi$, $\varphi_j(t_i)$ est calculée comme étant égale à $\hat{\varphi}_j$ ayant l'expression suivante :

$$\hat{\varphi}_j = \underset{\varphi_j}{Arg\ min} \left\{ \sum_{l,i} \gamma_j(i) \cdot \tau_l(i) \cdot \left[ (y_i - pt_{Moy}) - (\varphi_j(t_i) - \varphi_j(t_{ptMoy})) \right]^2 \right\}$$

où Argmin désigne l'argument minimum sur les fonctions $\varphi_j$ linéaires ou affines.

Il peut y avoir une indétermination initiale des seuils, qui fait que le modèle MOD est positionné à une constante additive près.

Lorsque la fonction linéaire ou affine $\Phi$, $\varphi_j(t_i)$ a été calculée au cours de la première étape, on calcule le ou les biais $b_k$ au cours d'une deuxième étape, décrite ci-dessous.

Suivant un mode de réalisation, le ou les biais $b_k$ est calculé comme minimisant, sur le premier intervalle de temps $INT_l$ ou intervalle de temps $INT_l$ constant déterminé, la marge de poussée $y_i$ à laquelle sont soustraits le biais $b_k$ et la fonction linéaire ou affine $\Phi$, $\varphi_j(t_i)$ qui est calculée au jour de mesure $t_i$ correspondant à la marge de poussée $y_i$,

c'est-à-dire minimisant l'écart $\quad y_i - \varphi_j(t_i) - \sum_{k} b_k . \delta_k(i) \quad$ sur le premier intervalle de temps $INT_l$ ou intervalle de temps $INT_l$ constant déterminé.

Pour ce faire, suivant un mode de réalisation, le ou les biais $b_k$ est calculé comme minimisant, sur le premier intervalle de temps $INT_l$ ou intervalle de temps $INT_l$ constant déterminé, l'expression suivante :

$$\sum_{i} \left[ y_i - \varphi_j(t_i) - \sum_{k} b_k . \delta_k(i) \right]^2$$

Suivant un mode de réalisation, on tient compte de la fonction $\gamma_j(t_i)$ indicatrice de l'origine des données depuis la source j de données ou du fournisseur j du composant k, et le ou les biais $b_k$ est calculé comme minimisant, sur le premier intervalle de temps $INT_l$ ou intervalle de temps $INT_l$ constant déterminé, l'expression suivante :

$$\sum_{i,j} \gamma_j(i) \cdot \left[ y_i - \varphi_j(t_i) - \sum_{k} b_k . \delta_k(i) \right]^2$$

Suivant un mode de réalisation, le ou les biais $b_k$ est calculé comme étant égal à $\hat{b}_k$ ayant l'expression suivante :

$$\hat{b}_k = \underset{b_k}{Arg\ min} \left\{ \sum_{i,j} \gamma_j(i) \cdot \left[ y_i - \varphi_j(t_i) - \sum_{k} b_k . \delta_k(i) \right]^2 \right\}$$

où Argmin désigne l'argument minimum sur le ou les biais $b_k$.

Après la deuxième étape, on corrige la marge de poussée $y_i$ pour calculer la marge de poussée débiaisée $y_i^{débiaisée}$, qui est égale à la marge de poussée $y_i$ à laquelle on a soustrait le ou les biais $b_k$ valable dans le ou les intervalles de temps $INT_l$ ou une moyenne des biais $b_k$ dans le ou les intervalles de temps $INT_l$.

Suivant un mode de réalisation, on calcule la marge de poussée débiaisée $y_i^{débiaisée}$ comme étant égale à

$$y_i^{débiaisée} = y_i - \sum_k \overline{b}_k$$

où $\overline{b}_k$ est le biais moyen du composant k du banc BM. Suivant un mode de réalisation, on identifie les biais moyens $\overline{b}_k$ introduits par les composants k du banc BM et éventuellement, dans le cas de présence de plusieurs fournisseurs j, les écarts entre les fournisseurs j (ou usineurs j). L'identification du biais moyen $\overline{b}_k$ est relative à une référence pour laquelle son biais associé est supposé nul.

Suivant un mode de réalisation, on calcule la marge de poussée corrigée, c'est-à-dire débiaisée, $y_i^{débiaisée}$ comme étant égale à

$$y_i^{débiaisée} = y_i - \sum_k \hat{b}_k \cdot \delta_k(i)$$

A la figure 5, le dispositif 1 de mesure suivant l'invention prend en entrée un jeu d'essais et permet de débiaiser la marge yi de poussée et la rendre indépendante des composants k du banc BM.

On décrit ci-dessous en référence à la figure 5 une utilisation d'un dispositif 1 de mesure suivant l'invention, au cours de laquelle la marge de poussée yi est mesurée et corrigée, suivant un mode de réalisation de l'invention. Ce dispositif 1 prend en entrée un jeu d'essais et permet de débiaiser la marge $y_i$ de poussée et la rendre indépendante des composants k du banc BM.

Suivant un mode de réalisation de l'invention, l'opérateur OP récupère les données de mesure correspondant aux dernières périodes de production. Ces données ont été automatiquement archivées dans une base de données BDD.

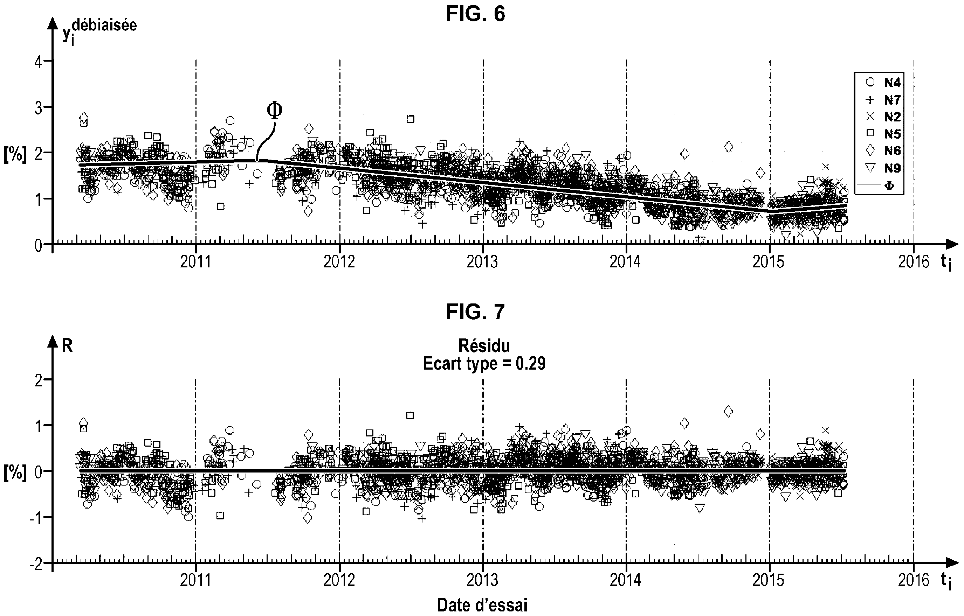

Suivant un mode de réalisation de l'invention, une interface homme-machine IHM (écran de visualisation ou autre) propose une interface de visualisation des mesures de poussée permettant d'extraire les moteurs dont les aubes (en anglais : fan) proviennent d'un fournisseur donné et qui sont mesurés par un banc BM spécifique. Cette interface IHM permet par exemple de superposer de tels affichages en utilisant des couleurs différentes par fournisseur et par banc BM/nacelle, par exemple selon les figures 6 à 13.

Suivant un mode de réalisation de l'invention, l'opérateur utilise l'interface IHM pour identifier les intervalles de temps $INT_l$ durant lesquels les équipements de banc sont constants et les enregistrer dans la base de données BDD. Pour cela il utilise par exemple des journaux de bord (en anglais : logbooks) de maintenance et la visualisation des courbes d'évolution temporelle des mesures de poussée. Les instants délimitant les intervalles de temps $INT_l$ sont par exemple choisis par clics avec la souris et sont automatiquement enregistrés. Une fois les instants de maintenance de bancs enregistrés, l'interface IHM permet de les visualiser sur les courbes.

Suivant un mode de réalisation de l'invention, l'opérateur OP définit pour chaque fournisseur k des instants de changement de tendance initiaux, c'est-à-dire les passages P12 entre intervalles de temps IPR1 et IPR2, par exemple par une initialisation manuelle. Pour cela il utilise par exemple des journaux de bord (en anglais : logbooks) de maintenance et la visualisation des courbes d'évolution temporelle des mesures de poussée. L'interface IHM permet par exemple de visualiser ces instants de changement de tendance initiaux P12, par exemple par une visualisation légèrement différente (par exemple des traits verticaux continus au lieu de traits pointillés pour les changements de configuration).

Suivant un mode de réalisation de l'invention, une unité de calcul automatique UC, telle que par exemple un ou plusieurs calculateur(s) et/ou un ou plusieurs ordinateur(s), et/ou un ou plusieurs processeur(s) et/ou un ou plusieurs serveur(s) et/ou une ou plusieurs machine(s), pouvant être programmées à l'avance par un programme informatique préenregistré, exécute la modélisation automatique par le modèle MOD linéaire ou affine par intervalles de temps de la marge de poussée yi pour un échantillon ECH d'un certain nombre n d'essais la correction automatique de la marge de poussée $y_i$ et les étapes du procédé de mesure décrit ci-dessus. Cette unité de calcul automatique UC fournit la marge de poussée corrigée $y_i^{débiaisée}$. Suivant un mode de réalisation de l'invention, cette marge de poussée corrigée $y_i^{débiaisée}$ est enregistrée dans la base de données BDD ou dans une autre mémoire, par exemple en association avec les jours ti, auxquels la mesure de poussée a été faite. Par exemple, l'unité de calcul automatique UC calcule les tendances de production des fournisseurs k et identifie les biais $b_k$ des bancs/nacelles ainsi que décrit ci-dessus. La marge de poussée corrigée $y_i^{débiaisée}$ et/ou les biais $b_k$ calculés sont par exemple enregistrés dans la base de données BDD ou dans une autre mémoire, par exemple en association avec les jours $t_i$, auxquels la mesure de poussée a été faite, et/ou sont par exemple affichés et/ou communiqués sur l'interface IHM et/ou transmis vers l'extérieur sur au moins un port de sortie. Un dispositif de transmission peut être prévu pour transmettre ces biais $b_k$ aux opérateurs OP de bancs qui peuvent corriger leurs mesures.

Des itérations des étapes décrites ci-dessus peuvent être effectuées en optimisant la position et le nombre des instants de changement de tendance.

Le calcul des biais correspond à une optimisation de la vraisemblance du modèle MOD linéaire ou affine par morceaux. Il est donc possible de choisir automatiquement par des méthodes d'optimisation les instants P12 de changement de tendance de production.

Suivant un mode de réalisation de l'invention, selon une première approche possible de choix des instants P12 de changement de tendance de production, une approche locale consiste, à partir d'une définition pour chaque fournisseur k des instants de changement de tendance initiaux P12 telle que décrite ci-dessus, à modifier localement ces instants de changement de tendance initiaux P12 par une descente de gradient. Cela ne change pas le nombre de points P12 de changement de tendance, mais optimise le modèle MOD de pentes.

Suivant un mode de réalisation de l'invention, selon une deuxième approche possible de choix des instants P12 de changement de tendance de production, on utilise une approche globale par une optimisation stochastique. Cette méthode consiste à tirer aléatoirement une population de sélection d'instants P12 (une liste de listes d'instants P12) et de calculer la qualité des modèles produits. Les meilleurs modèles des instants P12 sont conservés et une nouvelle population d'instants P12 à tester est générée automatiquement à partir de ceux-ci, par mutation locale (quelques pas de descente de gradient ou des variations locales aléatoires des positions P12 avec une variance de plus en plus petite) et par combinaison de listes (croisement). Au bout de quelques itérations, les listes survivantes correspondent aux meilleurs modèles. On a ainsi un mécanisme de type « génétique » permettant d'identifier les meilleurs instants P12 de changement de tendance ainsi que leur nombre.

La figure 6 représente la marge de poussée débiaisée $y_i^{débiaisée}$ en fonction du jour $t_i$ de mesure, pour plusieurs équipements k de banc, comme par exemple la nacelle secondaire (en anglais : cowl) N4, N7, N2, N5, N6, N9 pour le premier fournisseur d'aubes rotatives de la turbomachine TUR, à partir de la marge de poussée $y_i$ des figures 1 et 4. La figure 7 représente le résidu R de la marge de poussée débiaisée $y_i^{débiaisée}$ de la figure 6 par rapport à son modèle MOD de fonction linéaire ou affine $\Phi$ par intervalles de temps, qui possède un écart-type de 0.29, alors que l'écart-type des marges de poussée $y_i$ des figures 1 et 4 est de 0.49.

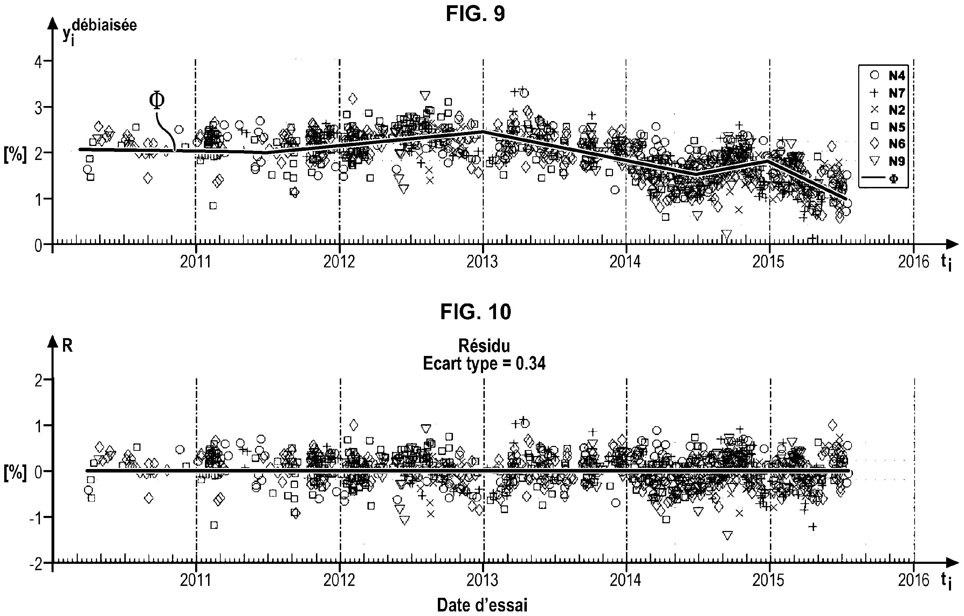

La figure 9 représente la marge de poussée débiaisée $y_i^{débiaisée}$ en fonction du jour $t_i$ de mesure, pour plusieurs équipements k de banc, comme par exemple la nacelle secondaire (en anglais : cowl) N4, N7, N2, N5, N6, N9 pour le deuxième fournisseur, à partir de la marge de poussée yi de la figure 8. La figure 10 représente le résidu R de chaque marge de poussée débiaisée $y_i^{débiaisée}$ de la figure 8 par rapport à son modèle MOD de fonction linéaire ou affine $\Phi$ par intervalles de temps, qui possède un écart-type de 0.29, alors que l'écart-type des marges de poussée $y_i$ de la figure 8 est de 0.54.

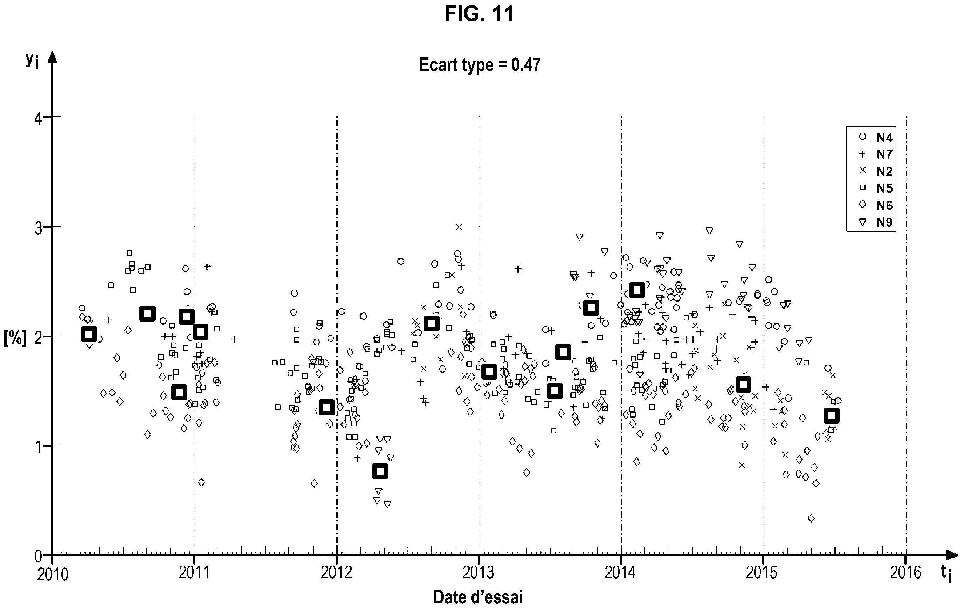

La figure 12 représente la marge de poussée débiaisée $y_i^{débiaisée}$ en fonction du jour $t_i$ de mesure, pour plusieurs équipements k de banc, comme par exemple la nacelle secondaire (en anglais : cowl) N4, N7, N2, N5, N6, N9 pour le troisième fournisseur, à partir de la marge de poussée $y_i$ de la figure 11. La figure 13 représente le résidu R de chaque marge de poussée débiaisée $y_i^{débiaisée}$ de la figure 12 par rapport à son modèle MOD de fonction linéaire ou affine $\Phi$ par intervalles de temps, qui possède un écart-type de 0.28, alors que l'écart-type des marges de poussée $y_i$ de la figure 11 est de 0.47.

Ainsi que le montrent ces figures 6, 7, 9, 10, 12 et 13 par comparaison aux figures 1, 8 et 11, le procédé et le dispositif suivant l'invention ont permis de réduire de plus de 40% environ l'écart-type et donc la dispersion de la marge de poussée $y_i$.

L'invention permet d'assurer l'indépendance du traitement de l'évolution de la marge de poussée et la quantification des biais des composants du banc. En outre, l'invention permet de déterminer l'évolution de la marge de poussée associée à des aubes fabriquées par des fournisseurs différents et de quantifier les biais introduits par les composants de bancs sans interaction entre ces 2 traitements. L'invention permet d'attribuer de façon quasi-certaine un résultat de poussée s'écartant par rapport à la spécification du moteur soit à une dérive des aubes fabriquées soit à une particularité du système d'essai. L'invention permet de contrôler la calibration des bancs BM et de leurs accessoires k d'une façon précise et continue en se basant sur les mesures opérationnelles. L'invention permet également de caractériser les tendances qualité des aubes fournies par les différents fabricants. L'invention permet de rendre les mesures de poussée plus robuste vis-à-vis des évolutions des conditions d'essai. L'invention permet un meilleur contrôle de la production en réduisant l'incertitude sur la mesure de la poussée.

Bien entendu, les modes de réalisation, caractéristiques et exemples ci-dessus peuvent être combinés l'un avec l'autre ou être sélectionnés indépendamment l'un de l'autre.

**Revendications**

**1.** Procédé de mesure d'une marge de poussée d'une turbomachine (TUR), dans lequel

on acquiert des données comportant la marge de poussée (y, $y_i$) laquelle est déterminée en fonction d'une poussée spécifiée (PSP) et d'une poussée mesurée (PST), la poussée mesurée (PST) étant déterminée sur un banc (BM) de mesure, qui comporte au moins un équipement (k) de banc et sur lequel se trouve la turbomachine (TUR),

**caractérisé en ce que** par une unité (UC) de calcul automatique

l'on modélise une évolution temporelle de la marge de poussée (y, $y_i$) par au moins une fonction linéaire ou affine ($\Phi$, $\varphi_j(t_i)$), qui est calculée pour au moins un intervalle ($INT_l$) de temps déterminé de la marge de poussée (y, $y_i$),

le au moins un intervalle de temps ($INT_l$) couvrant une durée de plusieurs jours et correspondant à un ou plusieurs premiers intervalles de temps ($INT_l$) où les conditions d'essai sont constantes, ou à au moins un intervalle de temps (ITC), pendant lequel le au moins un équipement (k) de banc est présent sur le banc (BM) de mesure, ou à au moins un intervalle de temps (ITC) d'utilisation de l'équipement (k) sur le banc (BM) de mesure,

on calcule au moins un biais ($b_k$) de l'équipement (k) de banc par rapport à la au moins une fonction linéaire ou affine ($\Phi$, $\varphi_j(t_i)$) ayant été calculée,

on corrige la marge de poussée (y, $y_i$) en lui soustrayant le au moins un biais ($b_k$) de l'équipement (k) de banc dans le au moins un intervalle ($INT_l$) de temps déterminé.

2. Procédé de mesure suivant la revendication 1, **caractérisé en ce que** la fonction linéaire ou affine ($\Phi$, $\varphi_j(t_i)$) est calculée comme approchant un point prescrit (pt) ou passant par un point prescrit (pt), le point prescrit (pt) ayant été calculé en fonction de la marge (y, $y_i$) de poussée sur l'intervalle ($INT_l$) de temps déterminé.

3. Procédé de mesure suivant la revendication 2, **caractérisé en ce que** le point prescrit (pt) est calculé comme étant un point moyen de la marge de poussée (y, $y_i$) et au milieu de l'intervalle ($INT_l$) de temps déterminé.

4. Procédé de mesure suivant la revendication 3, **caractérisé en ce que** le point moyen de la marge de poussée (y, $y_i$) est calculé comme étant au milieu de la marge de poussée (y) et au milieu de l'intervalle ($INT_l$) de temps déterminé.

5. Procédé de mesure suivant l'une quelconque des revendications 2 à 4, **caractérisé en ce que** le point prescrit (pt) a une valeur temporelle déterminée ($t_{ptMoy}$) dans le au moins un intervalle de temps ($INT_l$) et une valeur de marge de poussée ($pt_{Moy}$),

la fonction linéaire ou affine ($\Phi$, $\varphi_j(t_i)$) est calculée comme minimisant, sur le au moins un intervalle de temps ($INT_l$), l'écart entre la marge de poussée (y, $y_i$) et la fonction linéaire ou affine ($\Phi$, $\varphi_j(t_i)$), rapporté à l'écart entre la valeur de marge de poussée ($pt_{Moy}$) du point prescrit (pt) et la valeur ($\varphi_j(t_{ptMoy})$) de la fonction linéaire ou affine ($\Phi$, $\varphi_j(t_i)$) à la valeur temporelle déterminée ($t_{ptMoy}$) du point prescrit (pt).

6. Procédé de mesure suivant l'une quelconque des revendications 2 à 5, **caractérisé en ce que** la fonction linéaire ou affine $\varphi_j(t_i)$ est calculée comme minimisant, sur le au moins un intervalle de temps ($INT_l$), l'expression suivante :

$$E = \sum_{l,i} \left[ (y_i - pt_{Moy}) - (\varphi_j(t_i) - \varphi_j(t_{ptMoy})) \right]^2 \cdot \tau_l(i)$$

où $y_i$ est la marge de poussée,

$\tau_l(i)$ est une fonction binaire indicatrice de chaque intervalle de temps ($INT_l$),

$t_{ptMoy}$ est la valeur temporelle déterminée du point prescrit (pt) dans le au moins un intervalle de temps ($INT_l$),

$pt_{Moy}$ est la valeur de marge de poussée du point prescrit (pt) dans le au moins un intervalle de temps ($INT_l$).

7. Procédé de mesure suivant l'une quelconque des revendications précédentes, **caractérisé en ce que** le au moins un biais ($b_k$) est calculé comme minimisant, sur le au moins un intervalle de temps ($INT_l$), la marge de poussée ($y_i$) à laquelle sont soustraits le biais ($b_k$) et la fonction linéaire ou affine ($\Phi$, $\varphi_j(t_i)$) qui est calculée au jour de mesure ($t_i$) correspondant à la marge de poussée ($y_i$).

8. Procédé de mesure suivant l'une quelconque des revendications précédentes, **caractérisé en ce que** le au moins un biais $b_k$ est calculé comme minimisant, sur le au moins un intervalle de temps ($INT_l$), l'expression suivante :

$$\sum_i \left[ y_i - \varphi_j(t_i) - \sum_k b_k . \delta_k(i) \right]^2$$

où $y_i$ est la marge de poussée,
$\delta_k(i)$ est une fonction binaire indicatrice du au moins un équipement k du banc (BM) de mesure,
$\varphi_j(t_i)$ est la fonction linéaire ou affine.

9. Procédé de mesure suivant l'une quelconque des revendications précédentes, **caractérisé en ce que**

on tient compte de la fonction $\gamma_j(t_i)$ indicatrice de l'origine des données depuis la source j de données ou du fournisseur j du au moins un équipement k de banc, et le ou les biais $b_k$ est calculé comme minimisant, sur le au moins un intervalle de temps (INT$_l$), l'expression suivante :

$$\sum_{i,j} \gamma_j(i) \cdot \left[ y_i - \varphi_j(t_i) - \sum_k b_k . \delta_k(i) \right]^2$$

où $y_i$ est la marge de poussée,
$\delta_k(i)$ est une fonction binaire indicatrice du au moins un équipement k de banc,
$\varphi_j(t_i)$ est la fonction linéaire ou affine,
$\gamma_j(t_i)$ est la fonction indicatrice de l'origine des données depuis la source j de données ou du fournisseur j du au moins un équipement k de banc.

10. Dispositif de mesure d'une marge de poussée d'une turbomachine (TUR), le dispositif comportant un banc (BM) de mesure, qui comporte au moins un équipement (k) de banc et sur lequel est destiné à être montée la turbomachine (TUR), le banc (BM) de mesure comportant des moyens d'acquisition de données comportant la marge de poussée (y, $y_i$) de la turbomachine (TUR),

**caractérisé en ce que** le dispositif comporte en outre une unité (UC) de calcul automatique configurée pour modéliser une évolution temporelle de la marge de poussée (y, $y_i$) par au moins une fonction linéaire ou affine ($\Phi$, $\varphi_j(t_i)$), qui est calculée pour au moins un intervalle (INT$_l$) de temps déterminé de la marge de poussée (y, $y_i$), le au moins un intervalle de temps (INT$_l$) couvrant une durée de plusieurs jours et correspondant à un ou plusieurs premiers intervalles de temps (INT$_l$) où les conditions d'essai sont constantes, ou à au moins un intervalle de temps (ITC), pendant lequel le au moins un équipement (k) de banc est présent sur le banc (BM) de mesure, ou à au moins un intervalle de temps (ITC) d'utilisation de l'équipement (k) sur le banc (BM) de mesure,
calculer au moins un biais ($b_k$) de l'équipement (k) de banc par rapport à la au moins une fonction linéaire ou affine ($\Phi$, $\varphi_j(t_i)$) ayant été calculée,
corriger la marge de poussée (y, $y_i$) en lui soustrayant le au moins un biais ($b_k$) de l'équipement (k) de banc dans le au moins un intervalle (INT$_l$) de temps déterminé.

**Patentansprüche**

1. Vorrichtung zur Messung eines Schubkraft-Spielraums einer Turbomaschine (TUR), wobei:

Daten erfasst werden, die den Schubkraft-Spielraum (y, $y_i$) umfassen, der in Abhängigkeit von einer angegebenen Schubkraft (PSP) und einer gemessenen Schubkraft (PST) bestimmt wird, wobei die gemessene Schubkraft (PST) auf einem Messstand (BM) bestimmt wird, der mindestens eine Standausrüstung (k) umfasst und auf dem sich die Turbomaschine (TUR) befindet,
**dadurch gekennzeichnet, dass** durch eine automatische Recheneinheit (UC)
eine zeitliche Entwicklung des Schubkraft-Spielraums (y, $y_i$) durch mindestens eine lineare oder affine Funktion ($\Phi$, $\varphi_j(t_i)$) modelliert wird, die für mindestens ein bestimmtes Zeitintervall (INT$_l$) des Schubkraft-Spielraums (y, $y_i$) berechnet wird,

wobei das mindestens eine Zeitintervall (INT$_l$) eine Dauer von mehreren Tagen abdeckt und einem oder mehreren ersten Zeitintervallen (INT$_l$), in dem/denen die Versuchsbedingungen konstant sind, oder mindestens einem Zeitintervall (ITC), während dem die mindestens eine Standausrüstung (k) an dem Messstand (BM) vorhanden ist, oder mindestens einem Zeitintervall (ITC) der Verwendung der Ausrüstung (k) auf dem Messstand (BM) entspricht,

mindestens eine Verzerrung (b$_k$) der Standausrüstung (k) in Bezug auf die mindestens eine lineare oder affine Funktion ($\Phi, \varphi_j(t_i)$), die berechnet wurde, berechnet wird,

der Schubkraft-Spielraum (y, y$_i$) korrigiert wird, indem von ihm die mindestens eine Verzerrung (b$_k$) der Standausrüstung (k) in dem mindestens einen bestimmten Zeitintervall (INT$_l$) subtrahiert wird.

2. Messverfahren nach Anspruch 1, **dadurch gekennzeichnet, dass** die lineare oder affine Funktion ($\Phi, \varphi_j(t_i)$) als sich an einen vorgeschriebenen Punkt (pt) annähernd oder durch einen vorgeschriebenen Punkt (pt) verlaufend berechnet wird, wobei der vorgeschriebene Punkt (pt) in Abhängigkeit von dem Schubkraft-Spielraum (y, y$_i$) über das bestimmte Zeitintervall (INT$_l$) berechnet wurde.

3. Messverfahren nach Anspruch 2, **dadurch gekennzeichnet, dass** der vorgeschriebene Punkt (pt) als ein mittlerer Punkt des Schubkraft-Spielraums (y, y$_i$) und in der Mitte des bestimmten Zeitintervalls (INT$_l$) berechnet wird.

4. Messverfahren nach Anspruch 3, **dadurch gekennzeichnet, dass** der mittlere Punkt des Schubkraft-Spielraums (y, y$_i$) als in der Mitte des Schubkraft-Spielraums (y) und in der Mitte des bestimmten Zeitintervalls (INT$_l$) berechnet wird.

5. Messverfahren nach einem beliebigen der Ansprüche 2 bis 4, **dadurch gekennzeichnet, dass** der vorgeschriebene Punkt (pt) einen bestimmten Zeitwert (t$_{ptMoy}$) in dem mindestens einen Zeitintervall (INT$_l$) und einen Schubkraft-Spielraumwert (pt$_{Moy}$) aufweist,

wobei die lineare oder affine Funktion ($\Phi, \varphi_j(t_i)$) als die Abweichung zwischen dem Schubkraft-Spielraum (y, y$_i$) und der linearen oder affinen Funktion ($\Phi, \varphi_j(t_i)$), bezogen auf die Abweichung zwischen dem Schubkraft-Spielraumwert (pt$_{Moy}$) des vorgeschriebenen Punkts (pt) und dem Wert ($\varphi_h(t_{ptMoy})$) der linearen oder affinen Funktion ($\Phi, \varphi_j(t_i)$) am bestimmten Zeitwert (t$_{ptMoy}$) des vorgeschriebenen Punkts (pt), über das mindestens eine Zeitintervall (INT$_l$) minimierend berechnet wird.

6. Messverfahren nach einem beliebigen der Ansprüche 2 bis 5, **dadurch gekennzeichnet, dass** die lineare oder affine Funktion $\varphi_j(t_i)$ als den folgenden Ausdruck über das mindestens eine Zeitintervall (INT$_l$) minimierend berechnet wird:

$$E = \sum_{l,i} \left[ (y_i - pt_{Moy}) - (\varphi_j(t_i) - \varphi_j(t_{ptMoy})) \right]^2 \cdot \tau_l(i)$$

wo y$_i$ der Schubkraft-Spielraum ist,

$\tau_l(i)$ eine binäre Funktion ist, die jedes Zeitintervall (INT$_l$) angibt,

$t_{ptMoy}$ der bestimmte Zeitwert des vorgeschriebenen Punkts (pt) in dem mindestens einen Zeitintervall (INT$_l$) ist,

$pt_{Moy}$ der Schubkraft-Spielraumwert des vorgeschriebenen Punkts (pt) in dem mindestens einen Zeitintervall (INT$_l$) ist.

7. Messverfahren nach einem beliebigen der vorhergehenden Ansprüche, **dadurch gekennzeichnet, dass** die mindestens eine Verzerrung (b$_k$) als den Schubkraft-Spielraum (y$_i$), von dem die Verzerrung (b$_k$) und die lineare oder affine Funktion ($\Phi, \varphi_j(t_i)$) subtrahiert werden, die am Messtag (t$_i$) berechnet wird, der dem Schubkraft-Spielraum (y$_i$) entspricht, über das mindestens eine Zeitintervall (INT$_l$) minimierend berechnet wird.

8. Messverfahren nach einem beliebigen der vorhergehenden Ansprüche, **dadurch gekennzeichnet, dass** die mindestens eine Verzerrung b$_k$ als den folgenden Ausdruck über das mindestens eine Zeitintervall (INT$_l$) minimierend berechnet wird:

$$\sum_i \left[ y_i - \varphi_j(t_i) - \sum_k b_k \cdot \delta_k(i) \right]^2$$

wo $y_i$ der Schubkraft-Spielraum ist,
$\delta_k(i)$ eine binäre Funktion ist, die die mindestens eine Ausrüstung k des Messstands (BM) angibt,
$\varphi_j(t_i)$ die lineare oder affine Funktion ist.

9. Messverfahren nach einem beliebigen der vorhergehenden Ansprüche, **dadurch gekennzeichnet, dass**

die Funktion $\gamma_j(t_i)$ berücksichtigt wird, die den Ursprung der Daten ausgehend von der Datenquelle j oder dem Lieferanten j der mindestens einen Standausrüstung k angibt, und die Verzerrung oder Verzerrungen $b_k$ als den folgenden Ausdruck über das mindestens eine Zeitintervall (INT$_l$) minimierend berechnet wird:

$$\sum_{i,j} \gamma_j(i) \cdot \left[ y_i - \varphi_j(t_i) \sum_k b_k \cdot \delta_k(i) \right]^2$$

wo $y_i$ der Schubkraft-Spielraum ist,
$\delta_k(i)$ eine binäre Funktion ist, die die mindestens eine Standausrüstung k angibt,
$\varphi_j(t_i)$ die lineare oder affine Funktion ist,
$\gamma_j(i)$ die Funktion ist, die den Ursprung der Daten ausgehend von der Datenquelle j oder dem Lieferanten j der mindestens einen Standausrüstung k angibt.

10. Vorrichtung zur Messung eines Schubkraft-Spielraums einer Turbomaschine (TUR), wobei die Vorrichtung einen Messstand (BM) umfasst, der mindestens eine Standausrüstung (k) umfasst und auf dem die Turbomaschine (TUR) bestimmt ist, montiert zu werden, wobei der Messstand (BM) Mittel zur Erfassung von Daten umfasst, die den Schubkraft-Spielraum (y, $y_i$) der Turbomaschine (TUR) umfassen,
**dadurch gekennzeichnet, dass** die Vorrichtung ferner eine automatische Recheneinheit (UC) umfasst, die ausgestaltet ist zum:

Modellieren einer zeitlichen Entwicklung des Schubkraft-Spielraums (y, $y_i$) durch eine lineare oder affine Funktion ($\Phi, \varphi_j(t_i)$), die für mindestens ein bestimmtes Zeitintervall (INT$_l$) des Schubkraft-Spielraums (y, $y_i$) berechnet wird, wobei das mindestens eine Zeitintervall (INT$_l$) eine Dauer von mehreren Tagen abdeckt und einem oder mehreren ersten Zeitintervallen (INT$_l$), in dem/denen die Versuchsbedingungen konstant sind, oder mindestens einem Zeitintervall (ITC), während dem die mindestens eine Standausrüstung (k) an dem Messstand (BM) vorhanden ist, oder mindestens einem Zeitintervall (ITC) der Verwendung der Ausrüstung (k) auf dem Messstand (BM) entspricht,
Berechnen mindestens einer Verzerrung ($b_k$) der Standausrüstung (k) in Bezug auf die mindestens eine lineare oder affine Funktion ($\Phi, \varphi_j(t_i)$), die berechnet wurde,
Korrigieren des Schubkraft-Spielraums (y, $y_i$), indem von ihm die mindestens eine Verzerrung ($b_k$) der Standausrüstung (k) in dem mindestens einen bestimmten Zeitintervall (INT$_l$) subtrahiert wird.

## Claims

1. A method for measuring a thrust margin of a turbomachine (TUR), in which

data are acquired comprising the thrust margin (y, $y_i$) which is determined as a function of a specified thrust (PSP) and a measured thrust (PST), the measured thrust (PST) being determined on a measuring bench (BM), which comprises at least one bench equipment (k) and on which the turbomachine (TUR) is,
**characterized in that** by an automatic calculation unit (UC)
a time evolution of the thrust margin (y, $y_i$) is modelled by at least one linear or affine function ($\Phi, \varphi_j(t_i)$), which is calculated for at least one determined time interval (INT$_l$) of the thrust margin (y, $y_i$),
the at least one time interval (INT$_l$) covering a duration of several days and corresponding to one or more time intervals (INTl), where the test conditions are constant, or to at least one time interval (ITC), during which the at least one bench equipment (k) is present on the measuring bench (BM), or to at least one time interval (ITC) of use of the component (k) on the measuring bench (BM),

at least one bias ($b_k$) of the bench equipment (k) is calculated relative to the at least one linear or affine function ($\Phi$, $\varphi_j(t_i)$) having been calculated,

the thrust margin (y, $y_i$) is corrected by subtracting from it the at least one bias ($b_k$) of the bench equipment (k) in the at least one determined time interval ($INT_l$).

2. The measuring method according to claim 1, **characterized in that** the linear or affine function ($\Phi$, $\varphi_j(t_i)$) is calculated in approaching a prescribed point (pt) or passing through a prescribed point (pt), the prescribed point (pt) having been calculated as a function of the thrust margin (y, $y_i$) on the determined time interval ($INT_l$).

3. The measuring method according to claim 2, **characterized in that** the prescribed point (pt) is calculated as being an average point of the thrust margin (y, $y_i$) and in the middle of the determined time interval ($INT_l$).

4. The measuring method according to claim 3, **characterized in that** the average point of the thrust margin (y, $y_i$) is calculated as being in the middle of the thrust margin (y) and in the middle of the determined time interval ($INT_l$).

5. The measuring method according to any one of claims 2 to 4, **characterized in that** the prescribed point (pt) has a determined time value ($t_{ptMoy}$) in the at least one time interval ($INT_l$) and a thrust margin value ($pt_{Moy}$),

the linear or affine function ($\Phi$, $\varphi_j(t_i)$) is calculated as minimizing, on the at least one time interval ($INT_l$), the difference between the thrust margin (y, $y_i$) and the linear or affine function ($\Phi$, $\varphi_j(t_i)$), relative to the difference between the thrust margin value ($pt_{Moy}$) of the prescribed point (pt) and the value ($\varphi_j(t_{ptMoy})$) of the linear or affine function ($\Phi$, $\varphi_j(t_i)$) taken at the determined time value ($t_{ptMoy}$) of the prescribed point (pt).

6. The measuring method according to any one of claims 2 to 5, **characterized in that** the linear or affine function $\varphi_j(t_i)$ is calculated as minimizing, on the at least one time interval ($INT_l$), the following expression:

$$E = \sum_{l,i} \left[ (y_i - pt_{Moy}) - (\varphi_j(t_i) - \varphi_j(t_{ptMoy})) \right]^2 \cdot \tau_l(i)$$

where $y_i$ is the thrust margin,
$\tau_l(i)$ is a binary function indicative of each time interval ($INT_l$),
$t_{ptMoy}$ is the determined time value of the prescribed point (pt) in the at least one time interval ($INT_l$),
$pt_{Moy}$ is the thrust margin value of the prescribed point (pt) in the at least one time interval ($INT_l$).

7. The measuring method according to any one of the preceding claims, **characterized in that** the at least one bias ($b_k$) is calculated as minimizing, on the at least one time interval ($INT_l$), the thrust margin ($y_i$) from which the bias ($b_k$) and the linear or affine function ($\Phi$, $\varphi_j(t_i)$) are subtracted, which is calculated at the measuring day ($t_i$) corresponding to the thrust margin ($y_i$).

8. The measuring method according to any one of the preceding claims, **characterized in that** the at least one bias $b_k$ is calculated as minimizing, on the at least one time interval ($INT_l$), the following expression:

$$\sum_i \left[ y_i - \varphi_j(t_i) - \sum_k b_k . \delta_k(i) \right]^2$$

where $y_i$ is the thrust margin,
$\delta_k(i)$ is a binary function indicative of the at least one bench equipment k of the measuring bench (BM),
$\varphi_j(t_i)$ is the linear or affine function.

9. The measuring method according to any one of the preceding claims, **characterized in that**

the function $\gamma_j(t_i)$ indicative of the origin of data from the data source j or from the provider j of the at least one bench equipment k is considered, and the bias or the biases $b_k$ is calculated as minimizing, on the at least one

time interval (INT$_l$), the following expression:

$$\sum_{i,j} \gamma_j(i) \cdot \left[ y_i - \varphi_j(t_i) - \sum_k b_k . \delta_k(i) \right]^2$$

where $y_i$ is the thrust margin,

$\delta_k(i)$ is a binary function indicative of the at least one bench equipment k,

$\varphi_j(t_i)$ is the linear or affine function,

$\gamma_j(t_i)$ is the function indicative of the origin of data from the data source j or from the provider j of the at least one bench equipment k.

10. A device for measuring a thrust margin of a turbomachine (TUR), the device comprising a measuring bench (BM), which comprises at least one bench equipment (k) and on which the turbomachine (TUR) is intended to be mounted, the measuring bench (BM) comprising means to acquire data comprising the thrust margin (y, y$_i$) of the turbomachine (TUR),

**characterized in that** the device also comprises an automatic calculation unit (UC) configured to model a time evolution of the thrust margin (y, y$_i$) by at least one linear or affine function ($\Phi$, $\varphi_j(t_i)$), which is calculated for at least one determined time interval (INT$_l$) of the thrust margin (y, y$_i$), the at least one time interval (INT$_l$) covering a duration of several days and corresponding to one or more time intervals (INTI), where the test conditions are constant, or to at least one time interval (ITC), during which the at least one bench equipment (k) is present on the measuring bench (BM), or to at least one time interval (ITC) of use of the component (k) on the measuring bench (BM),

calculate at least one bias (b$_k$) of the bench equipment (k) relative to the at least one linear or affine function ($\Phi$, $\varphi_j(t_i)$) having been calculated,

correct the thrust margin (y, y$_i$) by subtracting from it the at least one bias (b$_k$) of the bench equipment (k) in the at least one determined time interval (INT$_l$).

EP 3 454 034 B1

## FIG. 1

Ecart type = 0.49

Date d'essai

## FIG. 2

EP 3 454 034 B1

**FIG. 3**

EP 3 454 034 B1

## FIG. 4

Ecart type = 0.49

FIG. 5

EP 3 454 034 B1

**FIG. 6**

**FIG. 7**

Résidu
Ecart type = 0.29

Date d'essai

**FIG. 8**

Ecart type = 0.54

## FIG. 9

EP 3 454 034 B1

## FIG. 10

Résidu
Ecart type = 0.34

Date d'essai

EP 3 454 034 B1

**FIG. 11**

Ecart type = 0.47

## FIG. 12

## FIG. 13

Résidu
Ecart type = 0.28

Date d'essai

EP 3 454 034 B1

**EP 3 454 034 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 1416112 A
- FR 2535847 A
- US 20160202131 A
- EP 1327750 A
- FR 3012930 A